# EUROPEAN PATENT APPLICATION

(11) **EP 4 841 468 A1**
(43) Date of publication of application: **18.11.2026**
(21) Application number: 26158634.1
(22) Date of filing: 13.02.2026
(51) Int. Cl.: G06F 16/3329

(54) **LOW LATENCY INTEGRATION OF CONTEXTUALLY RELEVANT CONTENT WITHIN ARTIFICIAL INTELLIGENCE GENERATED RESPONSES**

(30) Priority: 14.05.2025 US 202563805419 P; 30.12.2025 US 202519436834
(71) Applicant: Google LLC, Mountain View, CA 94043 (US)
(72) Inventor: Donamukkala, Raghavendra Rao, Mountain View, 94043 (US); Chitnis, Laukik, Mountain View, 94043 (US); Jain, Alpa, Mountain View, 94043 (US); Whalin, Timothy Benjamin, Mountain View, 94043 (US); Aggarwal, Abhishek, Mountain View, 94043 (US); Cordova, Jennifer Veneranda, Mountain View, 94043 (US); Moroz, Max, Mountain View, 94043 (US)
(74) Representative: Marks & Clerk GST

(57) **Abstract**

Aspects of the disclosure are directed to processing queries to present relevant digital content within AI generated responses to the queries. Determining the relevant digital content to present occurs while creating the AI generated responses to reduce latency as well as to provide more targeted and relevant digital content. An AI model for generating the response generates proxy phrases that another AI model for determining the relevant digital content utilizes. The AI generated response is presented with the relevant digital content by combining the AI generated response with the relevant digital content. This provides users and digital content owners with more of an ability to engage than a typical search engine result page while reducing latency in providing the AI generated response with the relevant digital content.

## Description

### CROSS-REFERENCE TO RELATED APPLICATIONS

The present application claims the benefit of the filing date of U.S. Provisional Patent Application No. 63/805,419, filed May 14, 2025, the disclosure of which is hereby incorporated herein by reference.

### BACKGROUND

Artificial intelligence (AI) generated responses present a different user experience compared to typical search engine result pages with links to relevant results. In particular, AI generated responses focus on providing an answer to a query without integrating relevant digital content associated with the answer to the query. Thus, users are left without clear pathways for further engagement with respect to their query and digital content owners have no manner to engage with the users when their digital content may be relevant to the query. Further, adding digital content to the answer to the query after the answer is already generated increases latency in providing the user with the answer, which may cause frustrations among users in having to wait for their answer because the digital content is being added.

### BRIEF SUMMARY

Aspects of the disclosure are directed to processing queries to present relevant digital content within AI generated responses to the queries. Determining the relevant digital content to present occurs while creating the AI generated responses to reduce latency as well as to provide more targeted and relevant digital content. An AI model for generating the response generates proxy phrases that another AI model for determining the relevant digital content utilizes. The AI generated response is presented with the relevant digital content by combining the AI generated response with the relevant digital content. This provides users and digital content owners with more of an ability to engage than a typical search engine result page while reducing latency in providing the AI generated response with the relevant digital content.

An aspect of the disclosure provides for a method for presenting digital content within an artificial intelligence (AI) response including: receiving, by one or more processors, intermediate data derived from an AI model processing a query; determining, by the one or more processors, digital content relevant to the query based on the intermediate data as the AI model is generating a response to the query; placing, by the one or more processors, the digital content with the response to the query; and outputting, by the one or more processors, the digital content with the response to the query for display.

Another aspect of the disclosure provides for a system including: one or more processors; and one or more storage devices coupled to the one or more processors and storing instructions that, when executed by the one or more processors, cause the one or more processors to perform the method of presenting digital content within an artificial intelligence (AI) response. Yet another aspect of the disclosure provides for a non-transitory computer readable medium for storing instructions that, when executed by one or more processors, cause the one or more processors to perform the method of presenting digital content within an artificial intelligence (AI) response.

In some examples, the query is received from a user device. In some examples, the digital content is an advertisement. In some examples, the AI model is at least one of a large language model or foundation model.

In some examples, the intermediate data includes at least one of classifier decisions or input features utilized by the AI model to generate the response to the query. In some examples, the intermediate data includes a proxy phrase to represent an intent of the query. In some examples, the proxy phrase omits, rearranges, or both omits and rearranges words in the query. In some examples, determining digital content relevant to the query further includes: comparing a plurality of digital content candidates to the proxy phrase; and selecting one or more of the digital content candidates that are similar to the proxy phrase to be the digital content relevant to the query. In some examples, the similarity is based at least on words in the proxy phrase compared to words in the digital content candidates or a subject of the proxy phrase compared to subjects of the digital content candidates. In some examples, selecting one or more of the digital content candidates is based on at least one of a similarity threshold, ranking the digital content candidates, or weighting the digital content candidates.

In some examples, placing the digital content with the response to the query further includes generating one or more phrases to represent the digital content. In some examples, generating one or more phrases to represent the digital content further includes comparing a number of tokens representing the one or more phrases to a threshold amount of tokens. In some examples, generating one or more phrases to represent the digital content further includes: determining that the number of tokens is greater than the threshold amount of tokens; and truncating the one or more phrases. In some examples, generating one or more phrases to represent the digital content further includes: determining that the number of tokens is greater than the threshold amount of tokens; and generating one or more new phrases to represent the digital content.

In some examples, placing the digital content with the response to the query further includes determining where to place the digital content within the response to the query based on aspects of the response. In some examples, the aspects of the response include a length of the response. In some examples, determining where to place the digital content further includes determining to place the digital content at one or more of a top, bottom, side, or within the response to the query. In some examples, placing the digital content with the response to the query further includes providing a graphical element to separate the digital content from the response to the query.

In some examples, outputting the digital content with the response to the query further includes displaying the digital content with the response to the query on a user device.

### BRIEF DESCRIPTION OF THE DRAWINGS

FIG. 1 depicts a block diagram of an example AI response generator according to aspects of the disclosure.
FIG. 2 depicts an example AI response generated with relevant digital content according to aspects of the disclosure.
FIG. 3 depicts another example AI response generated with relevant digital content according to aspects of the disclosure.
FIG. 4 depicts yet another example AI response generated with relevant digital content according to aspects of the disclosure.
FIG. 5 depicts a block diagram of an example digital content placement system according to aspects of the disclosure.
FIG. 6 depicts a block diagram of an example environment for implementing a digital content placement system according to aspects of the disclosure.
FIG. 7 depicts a block diagram of one or more AI model architectures according to aspects of the disclosure.
FIG. 8 depicts a flow diagram of an example process for presenting digital content in an AI generated response according to aspects of the disclosure.
FIG. 9 depicts a flow diagram of an example process for determining where to place digital content within an AI generated response according to aspects of the disclosure.

### DETAILED DESCRIPTION

The technology relates generally to delivering relevant digital content within AI generated responses. Digital content may refer to advertisements and/or other short-form text, image, and/or video content, e.g., posts, reviews, graphics, and/or condensed videos, as examples. Digital content may be delivered with reduced latency while maintaining accuracy in terms of what digital content would be relevant to the AI generated responses. This allows users to seamlessly connect with pertinent next steps based on their queries as well as digital content owners to engage with such users outside of the typical search engine result pages.

Processing the query to generate the AI response and deliver relevant digital content within the AI generated response occurs in parallel to reduce latency. Intermediate data, e.g., proxy phrases based on classifier decisions and input features, are generated by an AI model that processes the query and can be available via streaming to another AI model that determines the relevant digital content. AI models may refer to large language models, as an example. Thus, the digital content generation process can leverage the same contextual understanding that informs the query response itself, resulting in more targeted and relevant digital content. Further, processing the intermediate data can reduce latency by performing the digital content retrieval process while the AI response is being finalized.

A header and a digital content slot are generated in the AI response for the digital content to be a cohesive part of the AI response. The AI model for determining the relevant digital content may be trained to generate short phrases, e.g., generate a small amount of tokens, to ensure latency is not impacted by the header generation. Further, since the rendering of the digital content can occur after the AI response is generated, the addition of the digital content slot to the AI response should minimally or not affect latency. The digital content slot may be placed at the top, bottom, and/or sides of the AI response template to provide a clear separation between the AI response and the digital content.

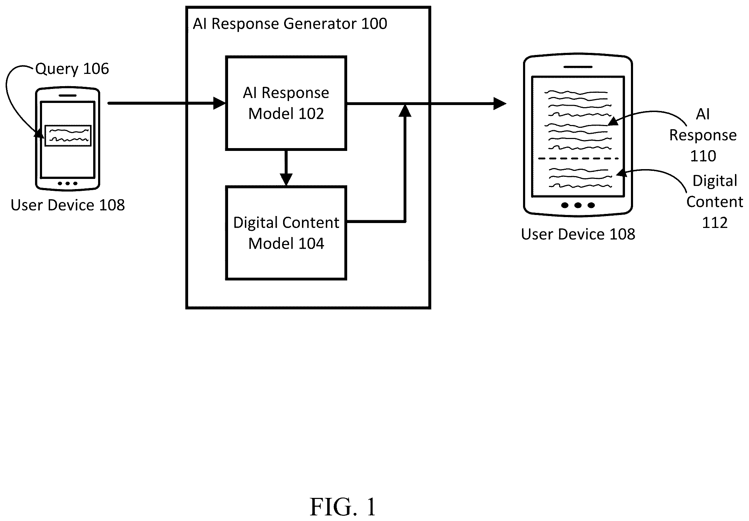

FIG. 1 depicts a block diagram of an example AI response generator 100 for generating AI responses to queries with digital content displayed within the AI responses. The AI response generator 100 can include an AI response model 102 and a digital content model 104. The AI response model 102 and the digital content model 104 can be AI models, such as large language models. The AI response model 102 and the digital content model 104 may also be two parts of a multi-modal model, such as a foundation model. The AI response model 102 can be trained and/or fine-tuned to the task of generating responses to queries 106 from a user device 108. The AI response model 102 can process the queries 106 to generate an AI response 110 that is provided back to the user device 108. The user device 108 can be any computing device, such as a desktop computer, laptop computer, tablet, and/or smartphone.

The queries 106 may be text prompts to be input to the AI response model 102. The AI response may be a text result displayed on the user device 108. Alternatively, or additionally, the queries 106 may include graphics, videos, and/or files to be processed by the AI response model 102 as part of generating the AI response 110. The AI response 110 may also include graphics and/or videos as part of the displayed result. For example, a query may be the text "I would like to compare similar leather pants for men from 'Fashion Brand‴. The AI model 102 can process the query to generate a text result describing various aspects of leather pants sold by "Fashion Brand". The result may also include graphics and/or videos of the leather pants being compared in the result.

As part of processing the queries 106, the AI response model 102 generates intermediate data, including one or more proxy phrases. Proxy phrase refers to one or more machine-generated words that collectively represent an intent of a respective query. The proxy phrase for a given query may differ from the query itself. For example, the proxy phrase can omit words that were present in the query and/or rearrange words in a different order than how they appeared in the given query to improve the speed at which the AI response model 102 can process the query while still representing the intent of the query. For example, the AI response model 102 can generate the proxy phrase "compare men's leather pants 'fashion brand‴ from the above query "I would like to compare similar leather pants for men from 'Fashion brand‴. The proxy phrase removes the unnecessary words "I would like to", "for", and "from" as well as switches the order for "leather pants" and "men". This can reduce the latency in generating and presenting the result of the query on the user device 108. The proxy phrase can be stored in a database (not shown) with a mapping to the query used to generate the proxy phrase. The mapping may be based on key-value pairs and/or other identifiers mapping the query to the proxy phrase. Multiple mappings of proxy phrases to corresponding queries can be stored together to create an intent lexicon. Rather than generate a proxy phrase for each query, the AI response model 102 may retrieve previously generated proxy phrases stored in the database using the mapping. This can further reduce latency in generating and presenting the result of the query on the user device 108, as retrieving a previously generated proxy phrase can occur faster than generating the proxy phrase from the query.

While processing the queries 106, the AI response model 102 determines if the intermediate data is sufficient for the digital content model 104 to determine relevant digital content 112 to present on the user device. The AI response model 102 can determine a relevance score, e.g., a numerical or percentage score indicative of relevance, from classifier decisions and input features and compare the relevance score to one or more thresholds to determine if the intermediate data is ready to be sent to the digital content model 104. For example, the AI response model 102 can determine the relevance score from the proxy phrase and compare the relevance score associated with the proxy phrase to one or more threshold scores that indicate whether there is enough information in the proxy phrase for the digital content model 104 to determine relevant digital content 112 from the proxy phrase. If the relevance score associated with the proxy phrase meets the one or more thresholds, e.g., is greater than or equal to a threshold score, the AI response model 102 can send the proxy phrase to the digital content model 104.

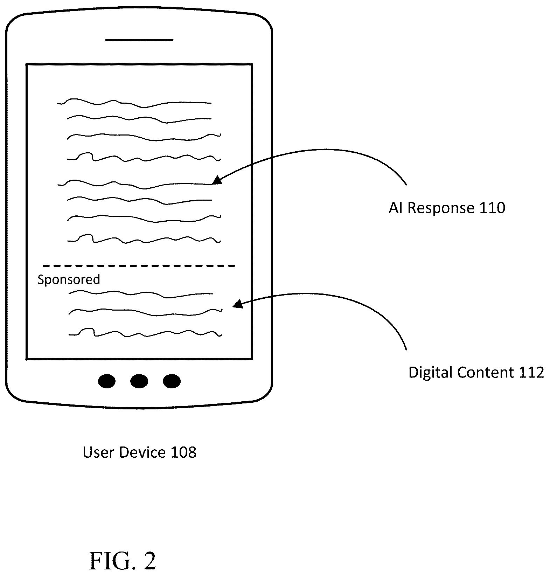

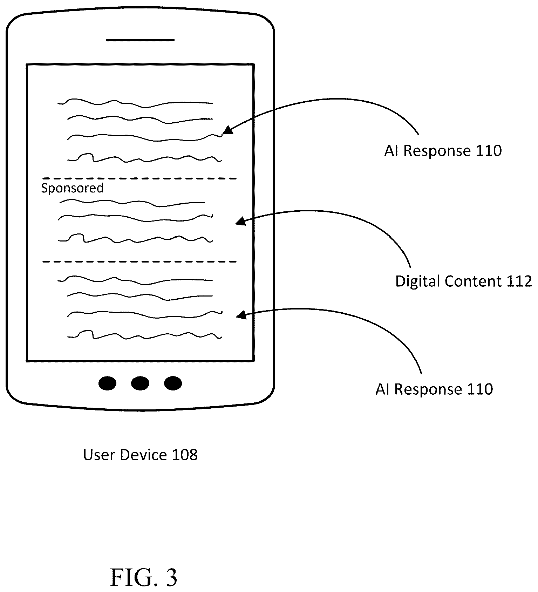

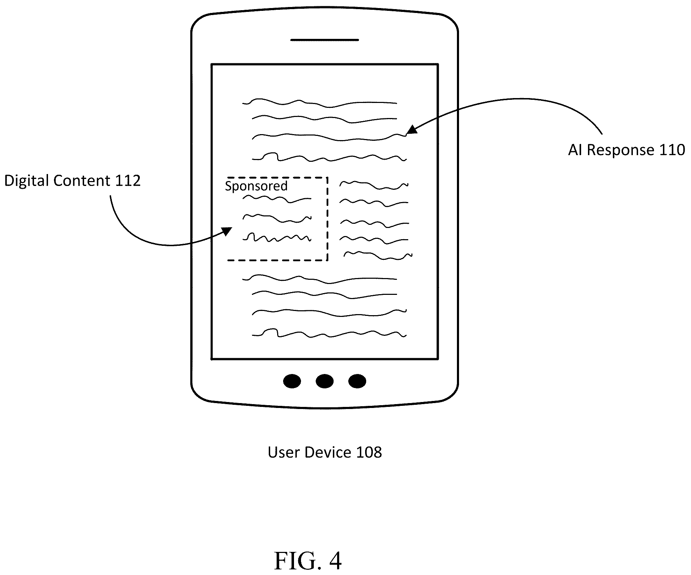

The digital content model 104 can be trained and/or fine-tuned to the task of determining, from the intermediate data, relevant digital content 112 to present on the user device with the AI response 110. The digital content model 104 can receive a proxy phrase from the AI response model 102 and determine the relevant digital content 112 from the proxy phrase. For example, the digital content model 104 can determine advertisements for leather pants from "Fashion Brand" or a similar brand are relevant to the proxy phrase "compare men's leather pants 'fashion brand‴. The digital content model 104 determines the relevant digital content 112 as the AI response model 102 is generating the AI response 110 to reduce latency in presenting the AI response 110 with the relevant digital content 112. The digital content model 104 can generate short phrases as the digital content 112 and place the digital content 112 at the top, bottom, sides, and/or within the AI response 110 to further reduce latency. FIG. 2 depicts an example AI response 110 generated with relevant digital content 112, where the digital content 112 is placed at the bottom of the AI response 110. FIG. 3 depicts an example AI response 110 generated with relevant digital content 112, where the relevant digital content 112 is placed within the AI response 110. FIG. 4 depicts an example AI response 110 generated with relevant digital content 112, where the relevant digital content 112 is placed on the side of the AI response 110. Placement of the digital content can be determined by the digital content placement system 200, as described further herein.

Referring back to FIG. 1, the digital content model 104 can generate a small amount of tokens that will fit in a digital content slot of the AI response 110 to generate the digital content 112. The digital content model 104 may also render the digital content 112 once the AI response 110 is complete. The digital content model 104 may provide a clear separation between the AI response 110 and digital content 112.

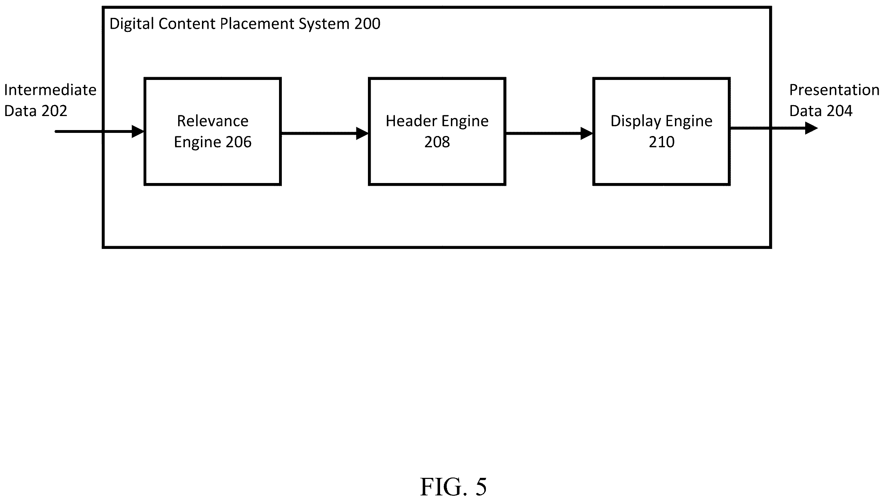

FIG. 5 depicts a block diagram of an example digital content placement system 200. The digital content placement system 200 can be implemented on one or more computing devices in one or more locations. The digital content placement system 200 can correspond to the digital content model 104 as depicted in FIG. 1.

The digital content placement system 200 can be configured to receive intermediate data 202. The intermediate data 202 can include classifier decisions and/or input features utilized by an AI model to generate responses to queries. For example, the intermediate data 202 can include proxy phrases to represent the intent of a query while improving the speed at which an AI model can process the query, such as by omitting or rearranging words in the query. As an example, digital content placement system 200 can receive the intermediate data 202 as part of a call to an application programming interface (API) exposing the digital content placement system 200 to one or more computing devices. The digital content placement system 200 can also receive the intermediate data 202 through a storage medium, such as remote storage connected to one or more computing devices over a network.

Based on the intermediate data 202, the digital content placement system 200 can generate output data, including presentation data 204. The presentation data 204 can include what digital content is being displayed with an AI response to a query as well as where the digital content is being displayed in relation to the AI response. For example, the digital content placement system 200 can be configured to send the presentation data 204 for display on a client or user display. The digital content placement system 200 can also be configured to provide the presentation data 204 as a set of computer-readable instructions, such as one or more computer programs for presenting digital content with AI generated responses. By using intermediate data 202, instead of completed AI generated responses to determine what digital content to display, the timing of providing digital content is improved. In this regard, the digital content may be provided nearly simultaneously with the AI generated response, such as within ± milliseconds of the AI generated response being provided.

The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model.

The digital content placement system 200 can further be configured to forward the presentation data 204 to one or more other devices configured for translating the presentation data 204 for display or into an executable program written in a computer programming language for presenting digital content with AI generated responses. The digital content placement system 200 can also be configured to send the presentation data 204 to a storage device for storage and later retrieval.

The digital content placement system 200 can include a relevance engine 206, a header engine 208, and a display engine 210. The relevance engine 206, header engine 208, and display engine 210 can be implemented as one or more computer programs, specially configured electronic circuitry, or any combination thereof.

The relevance engine 206 can be configured to determine relevant digital content to present with the AI response on the user device. The relevance engine 206 determines the relevant digital content as the AI response is being generated to reduce latency in displaying the AI response with the digital content. The relevance engine 206 uses intermediate data, which is generated as part of generating the AI response, to determine the relevant digital content. In using intermediate data, the relevance engine 206 can use proxy phrases to determine which digital content is relevant to the AI response. The relevance engine 206 can compare a plurality of digital content candidates with a proxy phrase and select one or more of the digital content candidates that are similar to the proxy phrase. The similarity may be based on words in the proxy phrase compared to words in the digital content candidates and/or overall subject of the proxy phrase compared to overall subject of the digital content candidates. The relevance engine 206 may utilize one or more similarity thresholds in selecting the one or more digital content candidates. The relevance engine 206 may also utilize ranking and/or weighting in selecting one or more of the digital content candidates.

For example, the relevance engine 206 may receive the proxy phrases as embeddings and/or convert the proxy phrases to embeddings. The embeddings may represent the words in the proxy phrases and/or the overall subject of the proxy phrase. The embeddings may be vector, matrix, and/or tensor embeddings, as examples. The relevance engine 206 may compare the embeddings for the proxy phrases to embeddings representing words and/or overall subject of digital content candidates and select one or more of the digital content candidates whose embeddings are similar to the embeddings for the proxy phrases based on cosine similarity.

The header engine 208 can be configured to generate phrases based on the selected digital content candidates for displaying with the AI response. The phrases can be short phrases, where a number of tokens representing the phrases are below or equal to a threshold amount of tokens. For example, the generated phrases can be no more than a threshold amount of tokens equivalent to five lines of text. The header engine 208 can compare the number of tokens representing the generated phrases to the threshold amount of tokens. The header engine 208 can truncate the generated phrases if the number of tokens is greater than the threshold amount or can generate a new phrase from the selected digital content candidates and compare again. Alternatively, or additionally, the header engine 208 can use an AI model, e.g., a large language model, to generate a relevant header based on the AI response, user query, and/or intermediate data. Generating short phrases for the selected digital content candidates can further reduce latency as less information is processed for displaying digital content with the AI response.

The display engine 210 can be configured to display the digital content in a digital content slot within the AI response. The display engine 210 can determine where to place the digital content to form a cohesive part of the AI response while still providing a clear separation between the AI response and the digital content. The display engine 210 can determine to place the digital content at the top, bottom, sides, and/or within the AI response based on aspects of the AI response, such as the length of the AI response. Alternatively, or additionally, the display engine 210 can determine to place the digital content based on static, predetermined instructions, e.g., always place at the top of the AI response or always place at the bottom of the AI response. Alternatively, or additionally, the display engine 210 can use an AI model, e.g., a large language model, to identify a natural break point in the AI generated response for the digital content through natural language processing.

For example, the display engine 210 can determine that the AI response has a short length, e.g., below a threshold length, and can, in response, display the digital content at the bottom of the AI response. As another example, the display engine 210 can determine that the AI response has a medium length, e.g., above a first threshold length but below a second higher threshold length, and can, in response, display the digital content at the top of the AI response. As yet another example, the display engine 210 can determine that the AI response has a long length, e.g., above a threshold length, and can, in response, display the digital content within the AI response or at the sides of the AI response.

The display engine 210 can further display the digital content with graphical elements to separate the digital content from the AI response. For example, the display engine can provide dashed or solid lines around the digital content and/or include a phrase indicating the digital content is sponsored or advertisement content.

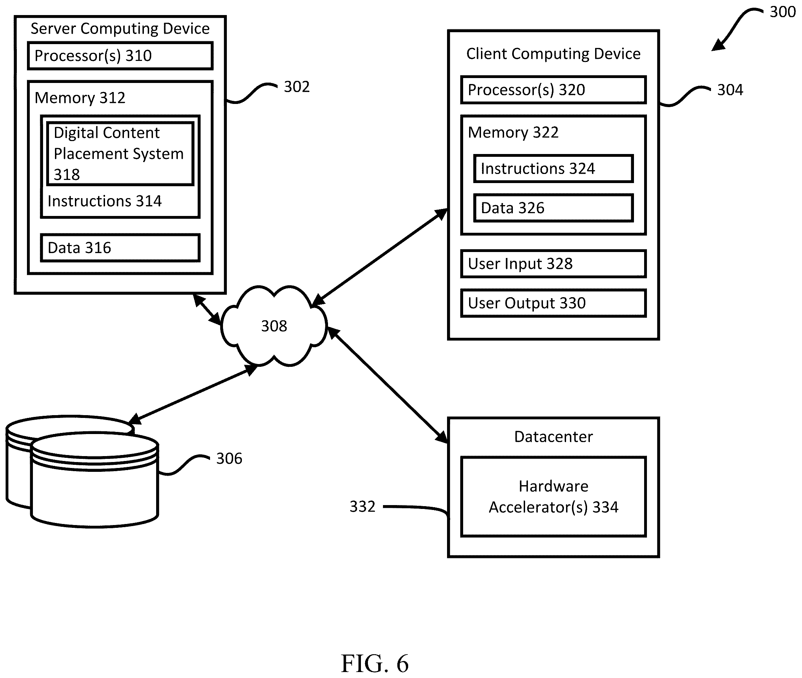

FIG. 6 depicts a block diagram of an example environment 300 for implementing a digital content placement system 318. The digital content placement system 318 can be implemented on one or more devices having one or more processors in one or more locations, such as in server computing device 302. A client computing device 304 and the server computing device 302 can be communicatively coupled to one or more storage devices 306 over a network 308. The storage devices 306 can be a combination of volatile and non-volatile memory and can be at the same or different physical locations than the computing devices 302, 304. For example, the storage devices 306 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 302 can include one or more processors 310 and memory 312. The memory 312 can store information accessible by the processors 310, including instructions 314 that can be executed by the processors 310. The memory 312 can also include data 316 that can be retrieved, manipulated, or stored by the processors 310. The memory 312 can be a type of transitory or non-transitory computer readable medium capable of storing information accessible by the processors 310, such as volatile and non-volatile memory. The processors 310 can include one or more central processing units (CPUs), graphic processing units (GPUs), field-programmable gate arrays (FPGAs), and/or application-specific integrated circuits (ASICs), such as tensor processing units (TPUs).

The instructions 314 can include one or more instructions that, when executed by the processors 310, cause the one or more processors 310 to perform actions defined by the instructions 314. The instructions 314 can be stored in object code format for direct processing by the processors 310, or in other formats including interpretable scripts or collections of independent source code modules that are interpreted on demand or compiled in advance. The instructions 314 can include instructions for implementing the digital content placement system 318, which can correspond to the digital content placement system 200 as depicted in FIG. 5. The digital content placement system 318 can be executed using the processors 310, and/or using other processors remotely located from the server computing device 302.

The data 316 can be retrieved, stored, or modified by the processors 310 in accordance with the instructions 314. The data 316 can be stored in computer registers, in a relational or non-relational database as a table having a plurality of different fields and records, or as JSON, YAML, proto, or XML documents. The data 316 can also be formatted in a computer-readable format such as, but not limited to, binary values, ASCII, or Unicode. Moreover, the data 316 can include information sufficient to identify relevant information, such as numbers, descriptive text, proprietary codes, pointers, references to data stored in other memories, including other network locations, or information that is used by a function to calculate relevant data.

The client computing device 304 can also be configured similarly to the server computing device 302, with one or more processors 320, memory 322, instructions 324, and data 326. The client computing device 304 can also include a user input 328 and a user output 330. The user input 328 can include any appropriate mechanism or technique for receiving input from a user, such as keyboard, mouse, mechanical actuators, soft actuators, touchscreens, microphones, and sensors.

The server computing device 302 can be configured to transmit data to the client computing device 304, and the client computing device 304 can be configured to display at least a portion of the received data on a display implemented as part of the user output 330. The user output 330 can also be used for displaying an interface between the client computing device 304 and the server computing device 302. The user output 330 can alternatively or additionally include one or more speakers, transducers or other audio outputs, a haptic interface or other tactile feedback that provides non-visual and non-audible information to the platform user of the client computing device 304.

Although FIG. 6 illustrates the processors 310, 320 and the memories 312, 322 as being within the respective computing devices 302, 304, components described herein can include multiple processors and memories that can operate in different physical locations and not within the same computing device. For example, some of the instructions 314, 324 and the data 316, 326 can be stored on a removable SD card and others within a read-only computer chip. Some or all of the instructions 314, 324 and data 316, 326 can be stored in a location physically remote from, yet still accessible by, the processors 310, 320. Similarly, the processors 310, 320 can include a collection of processors that can perform concurrent and/or sequential operations. The computing devices 302, 304 can each include one or more internal clocks providing timing information, which can be used for time measurement for operations and programs run by the computing devices 302, 304.

The server computing device 302 can be connected over the network 308 to a data center 332 housing any number of hardware accelerators 334. The data center 332 can be one of multiple data centers or other facilities in which various types of computing devices, such as hardware accelerators, are located. Computing resources housed in the data center 332 can be specified for deploying models, such as for presenting digital content with AI generated responses, as described herein.

The server computing device 302 can be configured to receive requests to process data from the client computing device 304 on computing resources in the data center 332. For example, the environment 300 can be part of a computing platform configured to provide a variety of services to users, through various user interfaces and/or application programming interfaces (APIs) exposing the platform services. The client computing device 304 can transmit input data as part of a query. The digital content placement system 318 can receive intermediate data derived from the input data, and in response, generate output data including digital content placed with a response to the query.

The server computing device 302 can maintain a variety of models in accordance with different constraints available at the data center 332. For example, the server computing device 302 can maintain different families for deploying models on various types of TPUs and/or GPUs housed in the data center 332 or otherwise available for processing.

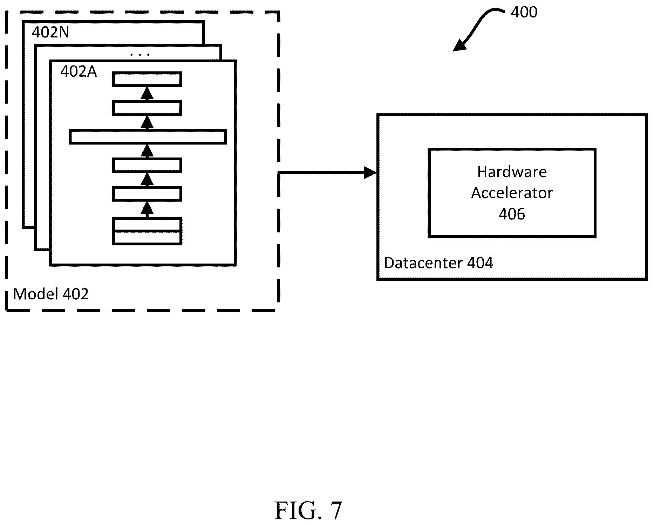

FIG. 7 depicts a block diagram 400 illustrating one or more AI model architectures 402 according to aspects of the disclosure. More specifically, FIG. 7 depicts architectures 402A-N for deployment in a datacenter 404 housing a hardware accelerator 406 on which the deployed AI models 402 execute, such as for the variety of services as described herein. The hardware accelerator 406 can be any type of processor, such as a CPU, GPU, FPGA, or ASIC such as a TPU.

An architecture 402 of an AI model can refer to characteristics defining the model, such as characteristics of layers for the model, how the layers process input, or how the layers interact with one another. The architecture 402 can also define types of operations performed within each layer. One or more AI model architectures 402 can be generated that can output AI responses to queries with digital content displayed therein. Example model architectures 402 can correspond to large language models and/or large foundation models.

The AI models can be trained according to a variety of different learning techniques. Learning techniques for training the AI models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be back propagated through the model to update weights for the model. For example, a supervised learning technique can be applied to calculate an error between outputs, with a ground-truth label of a training example processed by the model. Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

Referring back to FIG. 6, the devices 302, 304 and the data center 332 can be capable of direct and indirect communication over the network 308. For example, using a network socket, the client computing device 304 can connect to a service operating in the data center 332 through an Internet protocol. The devices 302, 304 can set up listening sockets that may accept an initiating connection for sending and receiving information. The network 308 can include various configurations and protocols including the Internet, World Wide Web, intranets, virtual private networks, wide area networks, local networks, and private networks using communication protocols proprietary to one or more companies. The network 308 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 308, in addition or alternatively, can also support wired connections between the devices 302, 304 and the data center 332, including over various types of Ethernet connection.

Although a single server computing device 302, client computing device 304, storage device 306, and data center 332 are shown in FIG. 6, it is understood that aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing machine learning models, or any combination thereof.

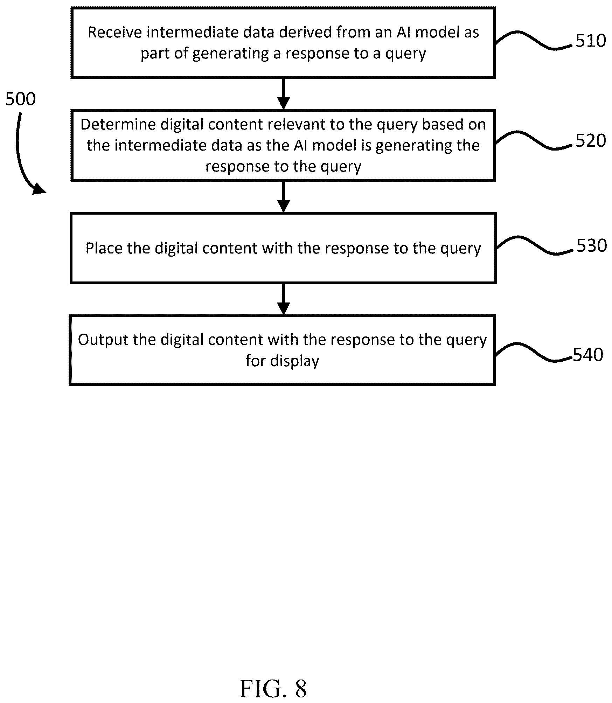

FIG. 8 depicts a flow diagram of an example process 500 for presenting digital content within an artificial intelligence (AI) response. The example process 500 can be performed on a system of one or more processors in one or more locations, such as the digital content placement system 200 as depicted in FIG. 5.

As shown in block 510, the digital content placement system 200 receives intermediate data derived from an AI model as part of generating a response to a query. The query may be received from a user device. The digital content may be an advertisement, as an example. The AI model may be a large language model and/or a foundation model, as examples. The intermediate data may include classifier decisions and/or input features utilized by the AI model to generate the response to the query. The intermediate data may include a proxy phrase to represent an intent of the query. The proxy phrase may omit and/or rearrange words in the query.

As shown in block 520, the digital content placement system 200 determines digital content relevant to the query based on the intermediate data as the AI model is generating the response to the query. The digital content placement system 200 may compare a plurality of digital content candidates to the proxy phrase and select one or more of the digital content candidates that are similar to the proxy phrase to be the digital content relevant to the query. The similarity may be based on words in the proxy phrase compared to words in the digital content candidates and/or a subject of the proxy phrase compared to subjects of the digital content candidates. Selecting one or more of the digital content candidates may be based on a similarity threshold, ranking the digital content candidates, and/or weighting the digital content candidates.

As shown in block 530, the digital content placement system 200 places the digital content with the response to the query. The digital content placement system 200 may generate one or more phrases to represent the digital content. The digital content placement system 200 may compare a number of tokens representing the one or more phrases to a threshold amount of tokens. The digital content placement system 200 may determine that the number of tokens is greater than the threshold amount of tokens and, in response, truncate the one or more phrases and/or generate one or more new phrases to represent the digital content.

The digital content placement system 200 may determine where to place the digital content within the response to the query based on aspects of the response. Aspects of the response may include a length of the response. The digital content placement system 200 may determine to place the digital content at a top, bottom, side, and/or within the response to the query. The digital content placement system 200 may provide a graphical element to separate the digital content from the response to the query.

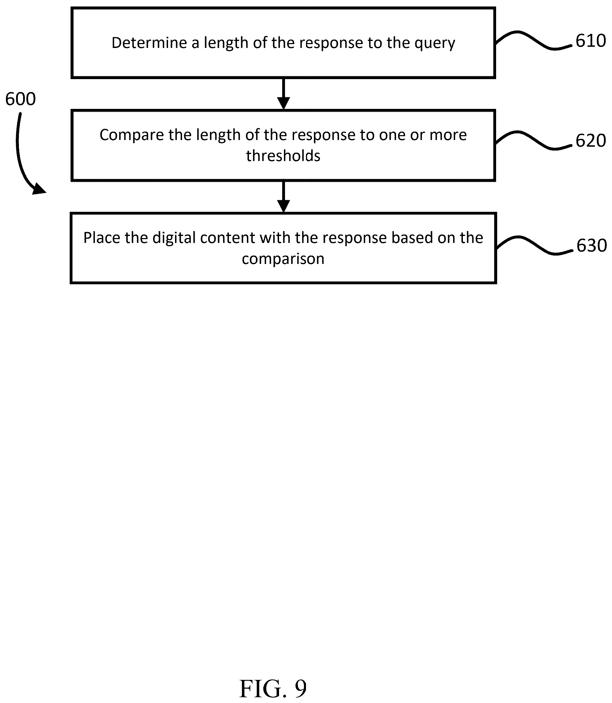

FIG. 9 depicts a flow diagram of an example process 600 for determining where to place digital content within an AI generated response. The example process 600 can be performed on a system of one or more processors in one or more locations, such as the digital content placement system 200 as depicted in FIG. 5.

As shown in block 610, the digital content placement system 200 can determine a length of the response to the query.

As shown in block 620, the digital content placement system 200 can compare the length of the response to one or more thresholds. For example, the digital content placement system 200 can compare the length of the response to a first threshold indicative of whether the response has a short or medium length and/or compare the length of the response to a second threshold indicative of whether the response has a medium or long length.

As shown in block 630, the digital content placement system 200 can place the digital content with the response based on the comparison. For example, the digital content placement system 200 can determine that the length of the response is less than the first threshold, indicating the response has a short length, and place the digital content at the bottom of the response based on the response having a short length. As another example, the digital content placement system 200 can determine that the length of the response is greater than or equal to the first threshold but less than the second threshold, indicating the response has a medium length, and place the digital content at the top of the response based on the response having a medium length. As yet another example, the digital content placement system 200 can determine that the length of the response is greater than the second threshold, indicating the response has a long length, and place the digital content within the response based on the response having a long length.

Referring back to FIG. 8, as shown in block 540, the digital content placement system 200 outputs the digital content with the response to the query for display. The digital content placement system 200 may display the digital content with the response to the query on a user device.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for presenting digital content within an artificial intelligence (AI) response comprising:
receiving, by one or more processors, intermediate data derived from an AI model processing a query;
determining, by the one or more processors, digital content relevant to the query based on the intermediate data as the AI model is generating a response to the query;
placing, by the one or more processors, the digital content with the response to the query; and
outputting, by the one or more processors, the digital content with the response to the query for display.

2. The method of claim 1, wherein the intermediate data comprises at least one of classifier decisions or input features utilized by the AI model to generate the response to the query.

3. The method of one of the previous claims, wherein the intermediate data comprises a proxy phrase to represent an intent of the query.

4. The method of claim 3, wherein the proxy phrase omits, rearranges, or both omits and rearranges words in the query.

5. The method of claim 3, wherein determining digital content relevant to the query further comprises:
comparing a plurality of digital content candidates to the proxy phrase; and
selecting one or more of the digital content candidates that are similar to the proxy phrase to be the digital content relevant to the query.

6. The method of claim 5, wherein the similarity is based at least on words in the proxy phrase compared to words in the digital content candidates or a subject of the proxy phrase compared to subjects of the digital content candidates.

7. The method of claim 5, wherein selecting one or more of the digital content candidates is based on at least one of a similarity threshold, ranking the digital content candidates, or weighting the digital content candidates.

8. The method of one of the previous claims, wherein placing the digital content with the response to the query further comprises generating one or more phrases to represent the digital content.

9. The method of claim 8, wherein generating one or more phrases to represent the digital content further comprises:
comparing a number of tokens representing the one or more phrases to a threshold amount of tokens;
determining that the number of tokens is greater than the threshold amount of tokens; and
truncating the one or more phrases.

10. The method of claim 8, wherein generating one or more phrases to represent the digital content further comprises:
comparing a number of tokens representing the one or more phrases to a threshold amount of tokens;
determining that the number of tokens is greater than the threshold amount of tokens; and
generating one or more new phrases to represent the digital content.

11. The method of one of the previous claims, wherein placing the digital content with the response to the query further comprises determining where to place the digital content within the response to the query based on aspects of the response.

12. The method of claim 11, wherein determining where to place the digital content further comprises determining to place the digital content at one or more of a top, bottom, side, or within the response to the query.

13. The method of one of the previous claims, wherein placing the digital content with the response to the query further comprises one of providing a graphical element to separate the digital content from the response to the query, or displaying the digital content with the response to the query on a user device.

14. A system comprising:
one or more processors; and
one or more storage devices coupled to the one or more processors and storing instructions that, when executed by the one or more processors, cause the one or more processors to perform the method for presenting digital content within an artificial intelligence (AI) response of any of the claims 1 to 13.

15. A non-transitory computer readable medium for storing instructions that, when executed by one or more processors, cause the one or more processors to perform the method for presenting digital content within an artificial intelligence (AI) response of any of the claims 1 to 13.
